# EUROPEAN PATENT SPECIFICATION

(11) **EP 1 382 468 B1**
(45) Date of publication and mention of the grant of the patent: **01.03.2006**
(21) Application number: 03254524.6
(22) Date of filing: 18.07.2003
(51) Int. Cl.: B60G 13/00, F16F 6/00

(54) **Suspension system**
Aufhängungssystem
Système de suspension

(30) Priority: 19.07.2002 US 396634 P
(43) Date of publication of application: 21.01.2004
(73) Proprietor: Martinrea International Inc., Vaughn, Ontario L4L 9C7 (CA)
(72) Inventor: Jaekel, Federico Guillermo, Aurora, Ontario L4G 6X2 (CA)
(74) Representative: Laight, Martin Harvey

(56) References cited:
- DE-A- 1 601 499
- DE-A- 2 554 686
- DE-A- 19 840 244
- US-A- 3 770 290

## Description

The invention relates to suspension systems in general, and more particularly, to suspension systems for motor vehicles.

Motor vehicle suspension systems are designed to absorb vibrational forces using a resilient member, such as a coil spring, and then dissipate those forces using a damping device, such as a shock absorber. The coil spring, or other resilient member, also biases the vehicle tires to maintain firm contact with the road.

A typical type of vehicle suspension system includes an assembly in which a shock absorber is coaxially mounted within a coil spring, such that the coil spring and the shock absorber act in parallel against the reaction forces of the vehicle tires against the road. The coil spring may be either a cylindrical coil spring, so as to provide an essentially constant compliance, or barrel shaped, so as to provide a compliance that varies with the displacement of the spring. In a typical suspension system, one spring/coil assembly is coupled to each wheel.

The design of the suspension system is a compromise between passenger comfort and vehicle handling concerns, as well as overall vehicle design constraints. For example, the use of softer, more compliant springs adds to passenger comfort, but compliant springs are typically longer in length, which may raise the vehicle body height. Therefore, in some designs, auxiliary air or hydropneumatic springs are used in addition to a relatively compliant primary coil spring. The use of the auxiliary air or hydropneumatic spring allows the suspension system to be designed such that the vehicle body remains relatively close to the ground, despite the longer length of the more compliant spring. However, the use of an auxiliary spring, in addition to the primary coil spring and a shock absorber, makes the suspension system more complex and more costly. Additionally, a more compliant spring may be more susceptible to damage under harsh driving conditions.

More complex, adaptive suspension systems are sometimes installed in racing vehicles and high-end mass-market motor vehicles, such as luxury sedans. These adaptive motor vehicle suspension systems may include means to adaptively control the damping level and the resiliency of the suspension system by using a hydraulic or electromechanical actuator to replace the typical coil spring and shock absorber. Adaptive systems, while allowing more control over the vehicle, are typically more expensive.

US Patent No. 3,770,290 to Bottalico discloses an alternative suspension system more suitable for lower-end mass-market motor vehicles. In the suspension system of this reference, a set of permanent magnets or electromagnets serves as the resilient member and/or the damping member. The magnets of this suspension system are mounted in housings that are spaced vertically from one another and are maintained in coaxial relationship by a central guide or post. Like magnetic poles of the two magnets are positioned opposite each other such that they create magnetic forces of repulsion. However, the reference does not disclose how such a magnetic suspension system might be combined with other conventional suspension components, such as shocks and struts.

DE-A-1601499 discloses a spring element consisting of at least two permanent magnets and/or electromagnets that can move with respect to each other, whose poles having the same polarity are turned towards each other.

DE-A-19840244 discloses a shock and vibration absorber intended to function as a suspension element within the exhaust system suspension located on the underside of a motor vehicle. The shock and vibration absorber has a cylindrical housing defining a chamber within which a movable piston is mounted. A piston is fitted with an array of magnets arranged in such a way that magnets with the same polarity face each other so that the arrays are biased apart.

According to a first aspect of the present invention, there is provided a vehicle suspension system, comprising: a damping device having first and second opposite portions movable in opposite directions toward and away from one another, said damping device having the first portion adapted to be coupled to a motor vehicle frame and the second portion adapted to be coupled to a motor vehicle wheel mount structure, said damping device being adapted to dampen movement of said portions toward or away from one another; and first and second magnetic structures connected to said first portion and said second portion, respectively, said first and second magnetic structures having like magnetic poles opposing one another to create a resilient magnetic bias to repel said first and second portions during a relative movement of said portions toward one another wherein the first and second magnetic structures are disposed exterior to the damping device and wherein the vehicle suspension system further comprising an outer structure adapted to receive and contain said damping device and said first and second magnetic structure.

According to a second aspect of the present invention, there is provided a vehicle suspension system, comprising: a damping device having first and second opposite portions movable in opposite directions toward and away from one another, said damping device having the first portion adapted to be coupled to a motor vehicle frame and the second portion adapted to be coupled to a motor vehicle wheel mount structure, said damping device being adapted to dampen movement of said portions toward and away from each other; a first magnetic structure, said first magnetic structure having an aperture provided through a portion thereof, the aperture receiving the first portion of said damping device so as to connect the first portion of said damping device and said first magnetic structure; a second magnetic structure, said second magnetic structure having an aperture provided through a portion thereof, the aperture receiving the second portion of said damping device so as to connect the second portion of said damping device and said second magnetic structure; wherein said first and second magnetic structures are arranged on the first and second opposite portions with like magnetic poles opposing one another to create a resilient magnetic bias to repel the first and second portions of said damping device during a relative movement of said portions toward one another wherein the first and second magnetic structures are disposed exterior to the damping device and wherein the vehicle suspension system further comprising an outer structure adapted to receive and contain said damping device and said first and second magnetic structure.

In one aspect, the present invention provides a vehicle suspension system. The vehicle suspension system includes a damping device and first and second magnetic structures.

The damping device has first and second opposite portions moveable in opposite directions toward and away from one another. The first portion of the damping device is adapted to be coupled to a motor vehicle frame and the second portion of the damping device is adapted to be coupled to a motor vehicle wheel mount structure such that the damping device is adapted to dampen movement of the first and second portions toward or away from one another.

The first and second magnetic structure of the vehicle suspension system are connected to the first portion and second portion, respectively. The arrangement of like magnetic poles of the two magnetic structures creates a resilient magnetic bias sufficient to repel the first and second opposite portions during a relative movement of the portions toward one another wherein the first and second magnetic structures are disposed exterior to the damping device.

Embodiments of the present invention will be described by way of example with reference to the following drawing, in which:

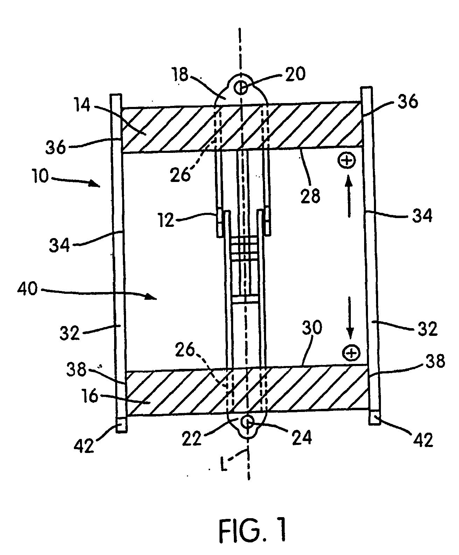

Figure 1 is a schematic sectional view of a suspension system with magnetic resiliency according to one embodiment of the present invention.

An embodiment of a suspension system with magnetic resiliency is illustrated in the schematic sectional view of FIGURE 1. The suspension system, generally indicated at reference numeral 10, includes a damping device 12, first and second magnetic structures 14,16 and a sleeve 32. In the following description, it should be understood that certain directional references (e.g., "vertical," "horizontal," "top," "bottom," "upper," "lower") are made with respect to the coordinate system of FIGURE 1, and may vary in an actual installation or use of suspension system 10.

In general, a damping device used as a component of suspension system 10 has opposite portions moveable in opposite directions toward and away from each other and is configured to dampen movement of those opposite portions in a direction toward or away from one another. The damping device 12 has a first portion 18 with an upper mount structure 20 and a second portion 22 with a lower mount structure 24. In damping device 12, the upper mount structure 20 is provided at the upper end of the first portion 18 and the lower mount structure 24 is provided at the lower end of the second portion 22. In other embodiments of suspension system 10, the upper and lower mount structures 20, 22 need not be provided at respective ends of the damping device. Instead, the mount structures 20, 22 could be disposed at any point along the first and second portions 18, 22, respectively, of the damping device 12, as appropriate to connect to the other components of suspension system 10.

In the embodiment illustrated in FIGURE 1, the damping device 12 is a conventional shock absorber, which may be of single-tube or twin-tube design. However, the damping device 12 may also be a strut or another conventionally known suspension damping member.

The upper mount structure 20 on the first portion 18 of the damping device 12 may be adapted for connection to the upper control arm of the motor vehicle if the suspension system 10 is mounted between upper and lower control arms, or it may be adapted for connection to the vehicle frame if the suspension system 10 is mounted between the upper control arm and the vehicle frame. Similarly, the lower mount structure 24 on the second portion 20 of the damping device 12 may be adapted for connection to the lower control arm of the motor vehicle if the suspension system 10 is mounted between upper and lower control arms, or it may be adapted for connection to the upper control arm if the suspension system 10 is mounted between the upper control arm and the vehicle frame. The motor vehicle is not shown in FIGURE 1. With the upper and lower mount structures 20, 24 mounted to appropriate motor vehicle structures, the damping device 12 is arranged to dissipate at least a portion of a force applied to the damping device 12 along a line of action L that extends between the first portion 18 and the second portion 22. More generally, the damping device 12 dampens movement of the first portion 18 and the second portion 22. For example, to dissipate or dampen a compressive force applied to the damping device 12 along the line of action L, the first and second portions 18, 22 of the damping device 12 would move toward one another.

The first magnetic structure 14 is mounted on the first portion 18 of the damping device 12, and the second magnetic structure 16 is mounted on the the second portion 22 of the damping device 12. In the embodiment of FIGURE 1, the two magnetic structures 14, 16 are annularly shaped permanent magnets. Each of the annular magnetic structures 14, 16 is provided with a central hole 26 of sufficient diameter to receive the exterior surface of the damping device 12, and each is secured to the exterior surface of the damping device 12 by appropriate means (e.g., adhesives or mechanical fasteners such as bolts). In this way, the first and second magnetic structures 14, 16 are maintained in coaxial alignment with one another. The central axis of the two magnetic structures 14, 16 coincides with the line of action L.

The two magnetic structures 14, 16 are arranged on the damping device 12 such that surfaces having like magnetic poles (e.g., surfaces 28 and 30 in FIGURE 1) are adjacent to and oppose one another, creating magnetic forces of repulsion, and thus, causing a resilient magnetic bias. In the arrangement of FIGURE 1, the resilient magnetic bias acts to move the first and second portions 18, 22 of the damping device 12 away from one another. The resilient magnetic bias created by the first and second magnetic structures 14, 16 allows the suspension system 10 to absorb at least a portion of a force applied along line of action L and dampen movement of the suspension system.

Although the first and second magnetic structures 14, 16 illustrated in FIGURE 1 are annular in shape, magnetic structures according to the invention need not be annular in shape. In addition, the two magnetic structures 14, 16 need not be contiguous over the outer circumference of the damping device 12. For example, the two magnetic structures 14, 16 could be rectangular in shape, or given any other polygonal shape (e.g., rectangular, pentagonal, hexagonal) of sufficient size to receive the damping device 12 (e.g., using hole 26 as illustrated in FIGURE 1). Alternatively, the two magnetic structures 14, 16 may comprise two pluralities of individual magnets, the two pluralities of magnets disposed, respectively, on the first and second portions 18, 22 of the damping device 12, with each of the individual magnets spaced circumferentially from the others about the outer circumference of the damping device 12. The use of two pluralities of individual magnets as the first and second magnetic structures 14, 16 would be particularly useful when, for example, the damping device 12 is non-cylindrical, or has an outer surface for which it would be difficult or inconvenient to manufacture a magnet with a corresponding hole 26 to receive the damping device 12. The use of two pluralities of individual magnets as the first and second magnetic structures 14, 16 would also be useful if the characteristics of a particular magnet make it unfeasible to machine or otherwise create a hole 26 in the magnet. In the embodiment illustrated in FIGURE 1, it is preferable if the two magnetic structures 14, 16 are positioned in coaxial alignment, and if two pluralities of magnets are used, it is preferable that the individual magnets of each plurality are positioned generally in alignment with corresponding individual magnets of the other plurality of magnets.

The damping device 12 with attached first and second magnetic structures 14, 16 is received in an outer structure such as sleeve 32. The outer surfaces 36, 38 of the first and second magnetic structures 14, 16 are adapted to slidingly engage an interior bearing surface 34 of the sleeve 32 so as to provide a fluid-tight seal between the outer surfaces 36, 38 of the magnetic structures 14, 16 and the interior bearing surface 34 of the sleeve 32 (i.e., as in a piston-cylinder relationship). The bearing surfaces 34, 36, 38 may be provided with appropriate lubrication to prevent wear, or additional sealing structure (e.g., gaskets or O-rings) to facilitate the seal. The fluid-tight sliding engagement of the two magnetic structures 14, 16 within the sleeve 32 isolates the interior cavity of the suspension system 10. This interior cavity is generally indicated by reference numeral 40 in FIGURE 1. If additional resiliency is desired in the suspension system 10, the interior cavity 40 may be filled with a pressurized gas. The pressurized gas in the interior cavity 40 would act as a pneumatic spring, providing a pneumatic resilient force as the first and second magnetic structures 14, 16 are forced towards one another by forces applied to the suspension system 10.

The sleeve 32 also isolates the first and second magnetic structures 14, 16 and damper 12 and protects them from the road conditions to which the vehicle is exposed. In particular, the sleeve 32 may prevent the components from being damaged by small rocks, stones or other road particles that might be propelled into the suspension during driving. The sleeve 32 includes rubber boots 42 to assist in mounting the suspension system 10 to a motor vehicle and to absorb minor vibrations. Depending on the mounting of suspension system 10, rubber boots 42 may also be provided at the upper end to absorb minor vibrations.

In the suspension system 10 illustrated in FIGURE 1, the magnetic structures 14, 16 are attached to the damping device 12, and thus have a restricted range of travel based on the range of travel of the damping device 12. The actual spacing of the two magnetic structures 14, 16 with respect to the damping device 12 may be varied to achieve an optimum range of travel, and also to maintain a desired level of repulsive magnetic bias between the first and second magnetic structures 14, 16. Additionally, horizontally-extending stops or endcaps may be installed on the sleeve 32 to restrict the range of travel of the damping device 12 and the magnetic structures 14, 16. If individual pluralities of magnets are used as the first and second magnetic structures 14, 16 as described above, the endcaps may be used to make a fluid-tight seal with the bearing surface 34 of the sleeve 32.

In certain embodiments, the sleeve 32 may not slidingly engage the two magnetic structures 14, 16, and instead, may merely contain the damping device 12 and magnetic structures 14, 16 and protect those components, as described above. The sleeve 32 and damping device 12 may be made of any non-magnetic material.

Although features of the invention have been described with respect to certain embodiments, it will be realised that alterations, modifications, and additions will occur to those skilled in the art and may be made without departing from the scope of the invention.

## Claims

1. A vehicle suspension system, comprising:
a damping device (12) having first and second opposite portions (18, 22) movable in opposite directions toward and away from one another, said damping device having the first portion (18) adapted to be coupled to a motor vehicle frame and the second portion (22) adapted to be coupled to a motor vehicle wheel mount structure, said damping device being adapted to dampen movement of said portions toward or away from one another; and
first and second magnetic structures (14, 16) connected to said first portion and said second portion, respectively, said first and second magnetic structures having like magnetic poles opposing one another to create a resilient magnetic bias to repel said first and second portions during a relative movement of said portions toward one another wherein the first and second magnetic structures are disposed exterior to the damping device and wherein the vehicle suspension system further comprises an outer structure (32) adapted to receive and contain said damping device (12) and said first and second magnetic structures (14, 16).

2. A vehicle suspension system according to Claim 1, wherein said first and second magnetic structures are provided with apertures (26) extending through portions thereof; and
wherein said first and second opposite portions (18, 22) are received in the apertures (26) of said first and second magnetic structures (14, 16), respectively.

3. A vehicle suspension system, comprising:
a damping device (12) having first and second opposite portions (18, 22) movable in opposite directions toward and away from one another, said damping device having the first portion (18) adapted to be coupled to a motor vehicle frame and the second portion (22) adapted to be coupled to a motor vehicle wheel mount structure, said damping device being adapted to dampen movement of said portions toward and away from each other;
a first magnetic structure (14), said first magnetic structure having an aperture (26) provided through a portion thereof, the aperture receiving the first portion of said damping device so as to connect the first portion of said damping device and said first magnetic structure;
a second magnetic structure (16), said second magnetic structure having an aperture (26) provided through a portion thereof, the aperture receiving the second portion of said damping device so as to connect the second portion of said damping device and said second magnetic structure;
wherein said first and second magnetic structures (14, 16) are arranged on the first and second opposite portions with like magnetic poles opposing one another to create a resilient magnetic bias to repel the first and second portions of said damping device during a relative movement of said portions toward one another wherein the first and second magnetic structures are disposed exterior to the damping device and wherein the vehicle suspension system further comprises an outer structure (32) adapted to receive and contain said damping device (12) and said first and second magnetic structures (14, 16).

4. A vehicle suspension system according to any of Claims 1 to 3, wherein an interior surface (34) of said outer structure (32) is positioned in sliding engagement with outer surfaces (36, 38) of said first and second magnetic structures (14, 16).

5. A vehicle suspension system according to Claim 4, wherein the interior surface (34) of said outer structure (32) is positioned in sliding engagement with the outer surfaces (36, 38) of said first and second magnetic structures (14, 16) so as to form a fluid-tight seal between said outer structure and said magnetic structures.

6. A vehicle suspension system according to any of Claims 1 to 5, further comprising a pressurised gas disposed within the suspension system (10).

7. A vehicle suspension system according to Claim 6, wherein the pressurised gas is disposed within a cavity (40) having cavity walls defined by said first and second magnetic structures, (14, 16) and said outer structure (32).

8. A vehicle suspension system according to Claim 7, wherein the pressurised gas resiliently biases said first and second magnetic structures (14, 16) away from one another.

9. A vehicle suspension system according to any of Claims 1 to 8, wherein said outer structure further comprises shock-absorbing boots (42) on end portions thereof.

10. A vehicle suspension system according to any of Claims 1 to 9, wherein said damping device (12) comprises a shock absorber.

11. A vehicle suspension system according to any of Claims 1 to 10, wherein said damping device (12) comprises a strut.

12. A vehicle suspension system according to any of Claims 1 to 11, wherein said first and second magnetic structures are disposed on exterior surfaces of said first and second opposite portions, respectively.

13. A vehicle suspension system according to Claim 12, wherein said first and second magnetic structures comprise first and second corresponding pluralities of individual magnets.

## Patentansprüche

1. Fahrzeugaufhängungssystem, welches aufweist:
eine Dämpfungsvorrichtung (12) mit einem ersten und einem zweiten, gegenüberliegenden Abschnitt (18, 22), die in entgegengesetzte Richtungen aufeinander zu und voneinander weg bewegbar sind, wobei der erste Abschnitt (18) der Dämpfungsvorrichtung so ausgebildet ist, dass er an einen Kraftfahrzeugrahmen gekoppelt werden kann und der zweite Abschnitt (22) so ausgebildet ist, dass er an eine Kraftfahrzeugrad-Befestigungsstruktur gekoppelt werden kann, wobei die Dämpfungsvorrichtung so ausgebildet ist, dass sie die Bewegung der Abschnitte aufeinander zu und voneinander weg dämpft, und
eine erste und eine zweite magnetische Struktur (14, 16), die mit dem ersten Abschnitt bzw. dem zweiten Abschnitt verbunden sind, wobei die erste und zweite magnetische Struktur sich gegenüberliegende, gleiche Magnetpole haben, wodurch eine elastische magnetische Vorspannung entsteht, um den ersten und zweiten Abschnitt während einer relativen Bewegung der Abschnitte aufeinander zu abzustoßen, wobei die erste und zweite magnetische Struktur außerhalb der Dämpfungsvorrichtung angeordnet sind, und wobei das Fahrzeugaufhängungssystem weiterhin eine äußere Struktur (32) aufweist, die so ausgebildet ist, dass sie die Dämpfungsvorrichtung (12) und die erste und zweite magnetische Struktur (14, 16) aufnimmt und enthält.

2. Fahrzeugaufhängungssystem nach Anspruch 1, wobei die erste und die zweite magnetische Struktur Öffnungen (26) aufweisen, die sich durch Abschnitte derselben erstrecken; und
wobei der erste und der zweite gegenüberliegende Abschnitt (18, 22) in den Öffnungen (26) der ersten bzw. zweiten magnetischen Struktur (14, 16) aufgenommen sind.

3. Fahrzeugaufhängungssystem, welches aufweist:
eine Dämpfungsvorrichtung (12) mit einem ersten und einem zweiten, gegenüberliegenden Abschnitt (18, 22), die in entgegengesetzte Richtungen aufeinander zu und voneinander weg bewegbar sind, wobei der erste Abschnitt (18) der Dämpfungsvorrichtung so ausgebildet ist, dass er an einen Kraftfahrzeugrahmen gekoppelt werden kann, und der zweite Abschnitt (22) so ausgebildet ist, dass er an eine Kraftfahrzeugrad-Befestigungsstruktur gekoppelt werden kann, wobei die Dämpfungsvorrichtung so ausgebildet ist, dass sie die Bewegung der Abschnitte aufeinander zu und voneinander weg dämpft;
eine erste magnetische Struktur (14), wobei die erste magnetische Struktur eine Öffnung (26) hat, die durch einen Abschnitt derselben vorgesehen ist, wobei die Öffnung den ersten Abschnitt der Dämpfungsvorrichtung aufnimmt, um den ersten Abschnitt der Dämpfungsvorrichtung mit der ersten magnetischen Struktur zu verbinden;
eine zweite magnetische Struktur (16), wobei die zweite magnetische Struktur eine Öffnung (26) hat, die durch einen Abschnitt derselben vorgesehen ist, wobei die Öffnung den zweiten Abschnitt der Dämpfungsvorrichtung aufnimmt, um den zweiten Abschnitt der Dämpfungsvorrichtung mit der zweiten magnetischen Struktur zu verbinden;
wobei die erste und die zweite magnetische Struktur (14, 18) an dem ersten und dem zweiten, gegenüberliegenden Abschnitt angeordnet sind, wobei gleiche Magnetpole sich gegenüberliegen, so dass sie eine elastische magnetische Vorspannung erzeugen, um den ersten und zweiten Abschnitt der Dämpfungsvorrichtung während einer relativen Bewegung der Abschnitte aufeinander zu abzustoßen, wobei die erste und zweite magnetische Struktur außerhalb der Dämpfungsvorrichtung angeordnet sind, und wobei das Fahrzeugaufhängungssystem weiterhin eine äußere Struktur (32) aufweist, die so ausgebildet ist, dass sie die Dämpfungsvorrichtung (12) und die erste und zweite magnetische Struktur (14, 16) aufnimmt und enthält.

4. Fahrzeugaufhängungssystem nach einem der Ansprüche 1 bis 3, wobei eine innere Fläche (34) der äußeren Struktur (32) in gleitendem Eingriff mit den äußeren Flächen (36, 38) der ersten und zweiten magnetischen Struktur (14, 16) angeordnet ist.

5. Fahrzeugaufhängungssystem nach Anspruch 4, wobei die innere Fläche (34) der äußeren Struktur (32) in gleitendem Eingriff mit den äußeren Flächen (36, 38) der ersten und der zweiten magnetischen Struktur (14, 16) angeordnet ist, um eine fluidundurchlässige Abdichtung zwischen der äußeren Struktur und der magnetischen Struktur zu bilden.

6. Fahrzeugaufhängungssystem nach einem der Ansprüche 1 bis 5, welches weiterhin ein Druckgas aufweist, das in dem Aufhängungssystem (10) angeordnet ist.

7. Fahrzeugaufhängungssystem nach Anspruch 6, wobei das Druckgas in einem Hohlraum (40) angeordnet ist, dessen Hohlraumwände von der ersten und der zweiten magnetischen Struktur (14, 16) und der äußeren Struktur (32) definiert sind.

8. Fahrzeugaufhängungssystem nach Anspruch 7, wobei das Druckgas die erste und zweite magnetische Struktur (14, 16) elastisch voneinander weg vorspannt.

9. Fahrzeugaufhängungssystem nach einem der Ansprüche 1 bis 8, wobei die äußere Struktur weiterhin stoßdämpfende Kappen (42) an ihren Endabschnitten aufweist.

10. Fahrzeugaufhängungssystem nach einem der Ansprüche 1 bis 9, wobei die Dämpfungsvorrichtung (12) einen Stoßdämpfer aufweist.

11. Fahrzeugaufhängungssystem nach einem der Ansprüche 1 bis 10, wobei die Dämpfungsvorrichtung (12) eine Strebe aufweist.

12. Fahrzeugaufhängungssystem nach einem der Ansprüche 1 bis 11, wobei die erste und zweite magnetische Struktur an äußeren Flächen des ersten bzw. zweiten, gegenüberliegenden Abschnitts angeordnet sind.

13. Fahrzeugaufhängungssystem nach Anspruch 12, wobei die erste und die zweite magnetische Struktur erste und zweite entsprechende Vielzahlen von einzelnen Magneten aufweisen.

## Revendications

1. Système de suspension pour véhicule, comprenant :
un dispositif d'amortissement (12) ayant des première et seconde parties opposées (18, 22) mobiles dans des directions opposées pour se rapprocher ou s'éloigner l'une de l'autre, la première partie (18) dudit dispositif d'amortissement étant adaptée pour être couplée à un châssis de véhicule automobile et la seconde partie (22) étant adaptée pour être couplée à une structure de montage de roue de véhicule automobile, ledit dispositif d'amortissement étant adapté pour amortir le rapprochement ou l'éloignement desdites parties l'une par rapport à l'autre ; et
des première et seconde structures magnétiques (14, 16) respectivement connectées à ladite première partie et à ladite seconde partie, lesdites première et seconde structures magnétiques ayant des pôles magnétiques identiques se faisant face l'un à l'autre pour créer une polarisation magnétique résiliente qui repousse lesdites première et seconde parties lors d'un déplacement desdites parties l'une vers l'autre, les première et seconde structures magnétiques étant disposées à l'extérieur du dispositif d'amortissement et le système de suspension pour véhicule comprenant en outre une structure extérieure (32) adaptée pour recevoir et contenir ledit dispositif d'amortissement (12) et lesdites première et seconde structures magnétiques (14, 16).

2. Système de suspension pour véhicule selon la revendication 1, dans lequel lesdites première et seconde structures magnétiques sont munies d'ouvertures (26) se prolongeant à travers des portions de celles-ci ; et dans lequel lesdites première et seconde parties opposées (18, 22) se logent respectivement dans les ouvertures (26) desdites première et seconde structures magnétiques (14, 16).

3. Système de suspension pour véhicule, comprenant :
un dispositif d'amortissement (12) ayant des première et seconde parties opposées (18, 22) mobiles dans des directions opposées pour se rapprocher ou s'éloigner l'une de l'autre, la première partie (18) dudit dispositif d'amortissement étant adaptée pour être couplée à un châssis de véhicule automobile et la seconde partie (22) étant adaptée pour être couplée à une structure de montage de roue de véhicule automobile, ledit dispositif d'amortissement étant adapté pour amortir le rapprochement ou l'éloignement desdites parties l'une par rapport à l'autre ; et
une première structure magnétique (14), ladite première structure magnétique ayant une ouverture (26) prévue à travers une partie de celle-ci, l'ouverture recevant la première partie dudit dispositif d'amortissement de manière à connecter la première partie dudit dispositif d'amortissement et ladite première structure magnétique ;
une seconde structure magnétique (16), ladite seconde structure magnétique ayant une ouverture (26) prévue à travers une partie de celle-ci, l'ouverture recevant la seconde partie dudit dispositif d'amortissement de manière à connecter la seconde partie dudit dispositif d'amortissement et ladite seconde structure magnétique ;
dans lequel lesdites première et seconde structures magnétiques (14, 16) sont agencées sur les première et seconde structures magnétiques ayant des pôles magnétiques identiques se faisant face l'un à l'autre pour créer une polarisation magnétique résiliente qui repousse lesdites première et seconde parties lors d'un déplacement desdites parties l'une vers l'autre, les première et seconde structures magnétiques étant disposées à l'extérieur du dispositif d'amortissement et le système de suspension pour véhicule comprenant en outre une structure extérieure (32) adaptée pour recevoir et contenir ledit dispositif d'amortissement (12) et lesdites première et seconde structures magnétiques (14, 16) .

4. Système de suspension pour véhicule selon l'une quelconque des revendications 1 à 3, dans lequel une surface intérieure (34) de ladite structure extérieure (32) est disposée en engagement coulissant avec des surfaces extérieures (36, 38) desdites première et seconde structures magnétiques (14, 16).

5. Système de suspension pour véhicule selon la revendication 4, dans lequel la surface intérieure (34) de ladite structure extérieure (32) est disposée en engagement coulissant avec les surfaces extérieures (36, 38) desdites première et seconde structures magnétiques (14, 16) de manière à former un dispositif d'étanchéité aux fluides entre ladite structure extérieure et lesdites structures magnétiques.

6. Système de suspension pour véhicule selon l'une quelconque des revendications 1 à 5, comprenant en outre un gaz pressurisé renfermé dans le système de suspension (10).

7. Système de suspension pour véhicule selon la revendication 6, dans lequel le gaz pressurisé est renfermé dans une cavité (40) ayant des parois de cavité définies par lesdites première et seconde structures magnétiques (14, 16) et ladite structure extérieure (32).

8. Système de suspension pour véhicule selon la revendication 7, dans lequel le gaz pressurisé polarise lesdites première et seconde structures magnétiques (14, 16) de manière résiliente pour qu'elles s'écartent l'une de l'autre.

9. Système de suspension pour véhicule selon l'une quelconque des revendications 1 à 8, dans lequel ladite structure extérieure comprend en outre des protections absorbant les chocs (42) sur des parties d'extrémité de celle-ci.

10. Système de suspension pour véhicule selon l'une quelconque des revendications 1 à 9, dans lequel ledit dispositif d'amortissement (12) comprend un amortisseur.

11. Système de suspension pour véhicule selon l'une quelconque des revendications 1 à 10, dans lequel ledit dispositif d'amortissement (12) comprend une jambe.

12. Système de suspension pour véhicule selon l'une quelconque des revendications 1 à 11, dans lequel lesdites première et seconde structures magnétiques sont respectivement disposées sur des surfaces extérieures desdites première et seconde parties opposées.

13. Système de suspension pour véhicule selon la revendication 12, dans lequel lesdites première et seconde structures magnétiques comprennent des première et seconde pluralités correspondantes d'aimants individuels.
